# EUROPÄISCHE PATENTSCHRIFT

(11) **EP 2 144 353 B1**
(45) Veröffentlichungstag und Bekanntmachung des Hinweises auf die Patenterteilung: **25.01.2012**
(21) Anmeldenummer: 09100344.2
(22) Anmeldetag: 18.06.2009
(51) Int. Cl.: H02K 15/08

(54) **Hubverstellvorrichtung sowie Vorrichtung zum Aufbringen eines Wickeldrahtes auf ein zu bewickelndes Bauteil**
Stroke adjustment and device to attach a wire to a component that is to be coiled
Dispositif de réglage du levage et dispositif d'application d'un fil métallique sur un composant devant être enroulé

(30) Priorität: 11.07.2008 DE 102008040346
(43) Veröffentlichungstag der Anmeldung: 13.01.2010
(73) Patentinhaber: Robert Bosch GmbH, 70442 Stuttgart (DE)
(72) Erfinder: Melchers, Michael, 76476 Bischweier (DE); Huber, Michael, 77836 Rheinmuenster (DE); Hauser, Peter, 77815 Buehl (DE)

(56) Entgegenhaltungen:
- DE-B3-102005 018 661
- JP-A- 60 218 270
- US-A- 3 493 186
- US-A- 5 964 429

## Beschreibung

### Stand der Technik

Die vorliegende Erfindung betrifft eine Hubverstellvorrichtung für eine Vorrichtung zum Aufbringen eines Wickeldrahtes auf ein zu bewickelndes Bauteil sowie eine mit einer Hubverstellvorrichtung ausgestattete Wickelvorrichtung.

Vorrichtungen zum Aufbringen eines Wickeldrahtes auf ein zu bewickelndes Bauteil werden beispielsweise zur Bewickelung von Ankern für elektrische Maschinen verwendet. Um verschiedene Wicklungsschritte und auch verschieden große Bauteile bewickeln zu können, kann ein Hub einer den Wickeldraht führenden Wickelnadel verändert werden. Zur Vermeidung von Wickelfehlern muss die Hubhöhe jedoch sehr exakt eingestellt werden.

Aus der DE 10 2005 018 661 B3 ist eine Vorrichtung zum Aufbringen eines Wickeldrahtes bekannt, welche eine Hubverstelleinheit aufweist, bei der eine Hubänderung durch eine relative Verdrehung einer Hubverstellwelle gegenüber einer Antriebswelle zum Antreiben eines Excenters, mit dessen Hilfe die Hubbewegung ausgeführt wird, aufweist. Die Hubverstelleinheit umfasst eine pneumatische Zahnkupplung. Bei der bekannten Vorrichtung hat sich jedoch herausgestellt, dass insbesondere bei einem Ausfall oder einer Störung eines der Antriebe eine mechanische Zerstörung bzw. Beschädigung von Komponenten des Antriebsstranges möglich ist. Der Grund ist die starre Verbindung des Drehantriebs mit dem Verstellantrieb. Hier muss der Verstellantrieb während des Wickelns leer mitlaufen. Ferner ist eine Positioniergenauigkeit einer Hubposition der Wickelnadel relativ ungenau, da die Hubvorrichtung eine Zahnkupplung verwendet, die kein stufenloses Verstellen ermöglicht. Ferner benötigt die bekannte Hubverstellvorrichtung einen relativ großen Bauraum.

US 3493186 A beschreibt eine Vorrichtung zum Bewickeln von Spulen, wobei der Nadelträger mittels eines Planetengetriebes vertikal bewegt wird und außerdem eine variable Wickelgeschwindigkeit erzeugt werden kann.

JP 60218270 A offenbart eine Drahtwickeivorrichtung mit einer einstellbaren Kurbel eines Kurbelantrieb, um die Höhe der Drahtwindungen verändern zu können.

### Vorteile der Erfindung

Die erfindungsgemäße Hubverstellvorrichtung mit den Merkmalen des Patentanspruchs 1 weist demgegenüber den Vorteil auf, dass sie ein Getriebe aufweist, welches zwischen einer Verstellwelle und einem Verstellantrieb angeordnet ist und welches für eine nicht mehr starre Verbindung zwischen dem Verstellantrieb und der Verstellwelle bereitstellt. Hierdurch kann ein freies Mitlaufen des Verstellantriebs verhindert werden, so dass insbesondere durch das Mitlaufen verursachte Folgeschäden vermieden werden können. Ferner kann eine Hubhöhe einer Wickelnadel während des Wickelprozesses geändert werden. Somit kann auf ein aufwendiges Stoppen des Wickelvorgangs verzichtet werden und ein kontinuierlicher Wickelprozess mit Hubhöhenänderung ausgeführt werden.

Darüber hinaus ist die erfindungsgemäße Hubverstellvorrichtung sehr kompakt aufgebaut und weist nur eine kleine Bauteileanzahl auf. Dies wird erfindungsgemäß dadurch erreicht, dass die Hubverstellvorrichtung eine Verstellwelle, ein Getriebe, einen Verstellantrieb und eine hohle Antriebswelle umfasst, welche mittels eines Drehantriebs antreibbar ist, wobei die Verstellwelle der Hubverstellvorrichtung in der hohlen Antriebswelle angeordnet ist. Das Getriebe weist dabei einen Außenring mit einer Innenverzahnung, ein flexibles Getriebebauteil mit Außenverzahnung, ein elliptisches Innenbauteil und eine zwischen dem elliptischen Innenbauteil und dem flexiblen Getriebebauteil radial angeordnete Lagereinrichtung auf. Hierbei ist eine Zähnezahl der Innenverzahnung und der Außenverzahnung verschieden voneinander und die Innenverzahnung befindet sich nur abschnittsweise mit der Außenverzahnung im Eingriff. Dabei ist der Außenring mit der Verstellwelle der Hubverstellvorrichtung verbunden und das elliptische Innenbauteil ist mit einer Abtriebswelle des Verstellantriebs verbunden. Insbesondere ist die erfindungsgemäße Hubstellvorrichtung nicht mehr starr mit einem Drehantrieb der Wickelvorrichtung verbunden, so dass ein freies Mitlaufen des Verstellantriebs nicht mehr vorhanden ist. Ferner weist die erfindungsgemäße Hubverstellvorrichtung eine sehr kompakte und kurze axiale Baulänge auf und eine Zahl und Komplexität der einzelnen Bauteile ist im Vergleich mit den bekannten Hubverstellvorrichtungen deutlich reduziert. Ferner wird auch eine Ansteuerung der Hubverstellvorrichtung vereinfacht.

Die Unteransprüche zeigen bevorzugte Weiterbildungen der Erfindung.

Vorzugsweise ist das flexible Getriebebauteil eine flexible Buchse mit Außenverzahnung oder ein flexibler Zahnriemen.

Weiter bevorzugt bilden das Getriebe und der Verstellantrieb eine kompakte Baueinheit. Hierdurch kann eine weitere Reduzierung einer axialen Baulänge erreicht werden.

Bevorzugt ist auch das Getriebe der Hubverstellvorrichtung in der hohlen Antriebswelle angeordnet. Dies ermöglicht eine besonders kompakte Bauweise.

Weiterhin betrifft die vorliegende Erfindung eine Wickelvorrichtung zum Aufbringen eines Wickeldrahtes auf ein zu wickelndes Bauteil mit einer erfindungsgemäßen Hubverstellvorrichtung.

### Zeichnung

Nachfolgend wird unter Bezugnahme auf die begleitende Zeichnung eine Hubverstellvorrichtung gemäß einem bevorzugten Ausführungsbeispiel der Erfindung im Detail beschrieben. In der Zeichnung ist:
- Figur 1: eine schematische Ansicht einer Wickelvorrichtung mit einer Hubverstellvorrichtung gemäß einem Ausführungsbeispiel der Erfindung, und
- Figur 2: eine schematische Schnittansicht der in Figur 1 gezeigten Hubverstellvorrichtung.

### Bevorzugte Ausführungsform der Erfindung

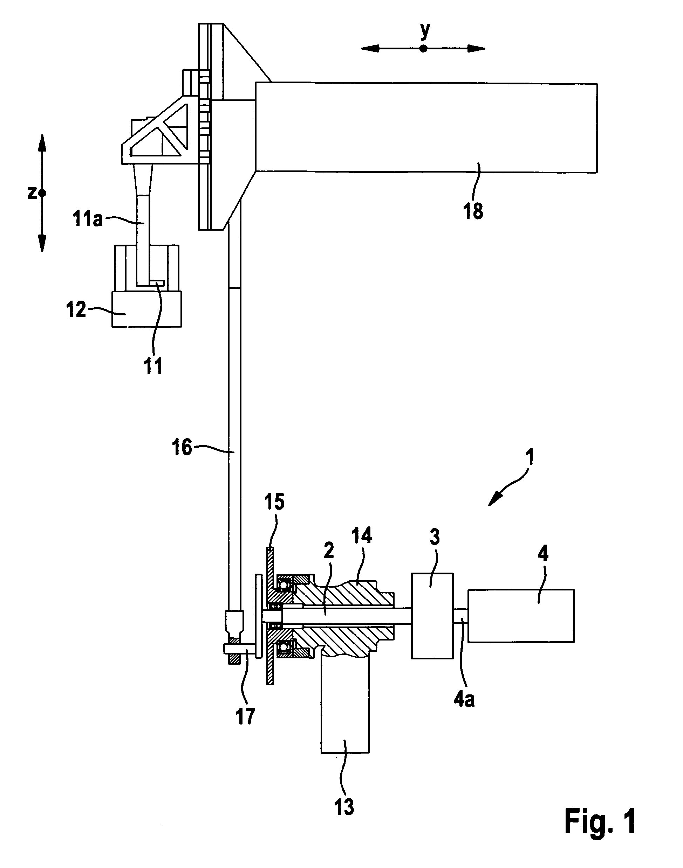

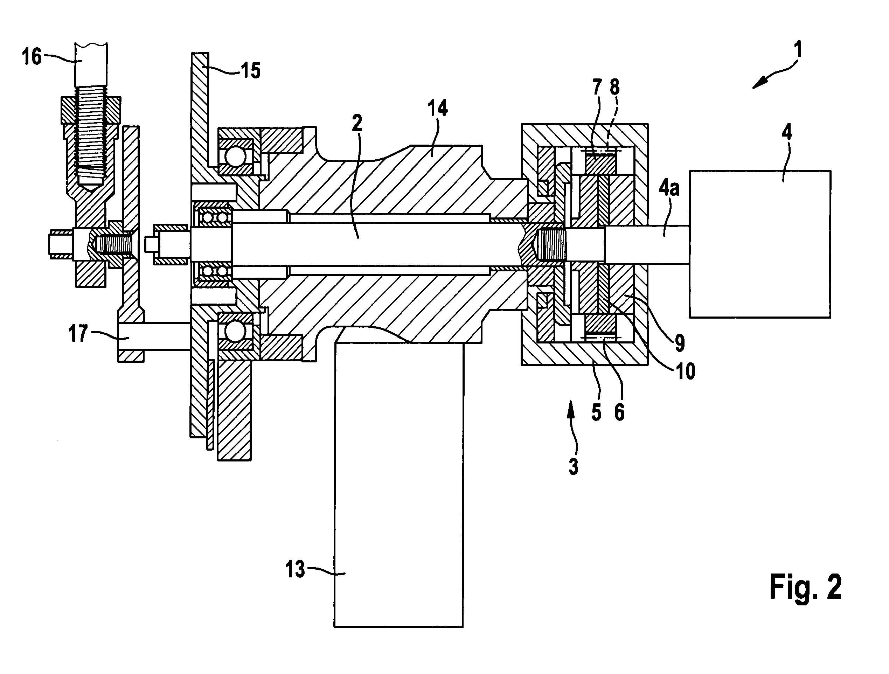

Nachfolgend wird unter Bezugnahme auf die Figuren 1 und 2 eine Wickelvorrichtung 10 mit einer erfindungsgemäßen Hubverstellvorrichtung 1 im Detail beschrieben.

Figur 1 zeigt eine Wickelvorrichtung 10 zum Aufbringen eines nicht dargestellten Wickeldrahtes auf ein zu bewickelndes Bauteil 12. Die Wickelvorrichtung 10 umfasst eine Wickelnadel 11, welche am Ende eines Nadelträgers 11a angeordnet ist sowie einen X-Y-Koordinatentisch 18. Wie durch die Doppelpfeile Y und Z angedeutet, kann sich die Wickelnadel 11 hin- und hergehend in Y- bzw. Z-Richtung bewegen. Der Antrieb in Z-Richtung erfolgt dabei über eine Kurbelstange 16, welche an einer Kurbelscheibe 15 befestigt ist. Die Kurbelstange 16 ist dabei über einen Hubzapfen 17 mit der Kurbelscheibe 15 verbunden. Die Kurbelscheibe 15 ist über eine Hohlwelle 14 mit einem Drehantrieb 13 verbunden. Der Drehantrieb 13 ist dabei über ein Winkelgetriebe (nicht gezeigt) mit der Hohlwelle 14 verbunden.

Ferner umfasst die Wickelvorrichtung 10 zur Einstellung einer gewünschten Hubhöhe der Wickelnadel 11 eine Hubverstellvorrichtung 1. Die Hubverstellvorrichtung 1 umfasst eine Verstellwelle 2, ein Getriebe 3 und einen Verstellantrieb 4 und ist im Detail aus Figur 2 ersichtlich. Das Getriebe 3 ist mit dem Verstellantrieb 4 über eine Abtriebswelle 4a des Verstellantriebs 4 verbunden. Das Getriebe 3 ist als Harmonic-Drive-Getriebe ausgebildet und umfasst einen Außenring 5 mit einer Innenverzahnung 6, eine flexible Buchse 7 mit einer Außenverzahnung 8, ein elliptisches Innenbauteil 9 und ein Kugellager 10. Das Kugellager 10 ist zwischen dem elliptischen Innenbauteil 9 und der flexiblen Buchse 7 angeordnet. Das elliptische Innenbauteil 9 weist eine zentrische Öffnung auf, mit welcher es auf der Abtriebswelle 4a angeordnet ist. Somit ist das elliptische Innenbauteil 9 der angetriebene Teil des Getriebes, welcher über das Kugellager 10 die flexible Buchse 7 verformt, so dass sich die flexible Buchse an zwei einander gegenüberliegenden Abschnitten mit der Innenverzahnung 6 des Außenrings 5 im Eingriff befindet. Somit ergibt sich ein abschnittsweiser Eingriff zwischen der Innenverzahnung 6 und der Außenverzahnung 8, jeweils um 180° entgegengesetzt. Der Abtrieb erfolgt über den Außenring 5. Die Zähnezahlen der Innenverzahnung 6 und der Außenverzahnung 8 sind dabei unterschiedlich, wobei vorzugsweise eine Zähnezahl des Außenrings 5 größer, z.B. um zwei Zähne, als eine Zähnezahl der flexiblen Buchse 7 ist. Hierdurch kann eine große Untersetzung realisiert werden. Der Außenring 5 befindet sich dabei mit der Verstellwelle 2 in Verbindung, wobei die Verstellwelle 2 in der Hohlwelle 14 der Wickelvorrichtung 10 koaxial angeordnet ist. Durch eine relative Drehbewegung zwischen der Verstellwelle 2 und der Hohlwelle 14 wird eine radiale Verlagerung des Hubzapfens 17 realisiert, wodurch eine Hubhöhe der Wickelnadel 11 verändert werden kann. Erfindungsgemäß kann dabei eine Hubhöhe auch während eines Wickelvorgangs geändert werden, so dass sehr kurze Wickelzeiten realisiert werden können. Ferner weist die erfindungsgemäße Hubvorrichtung 1 keine Kupplung auf, so dass insbesondere die im Stand der Technik notwendigen Einkuppel- bzw. Auskuppelschritte entfallen können. Durch die Verwendung des Getriebes 3 wird ferner sichergestellt, dass der Verstellantrieb 4 während des Wickelvorgangs nicht mitgedreht wird, so dass insbesondere bei einem Ausfall des Verstellantriebs 4 gravierende mechanische Beschädigungen von Komponenten des Antriebsstranges nicht möglich sind. Ferner kann mittels der erfindungsgemäßen Hubverstellvorrichtung 1 eine sehr genaue Positionierung der Wickelnadel 11 ermöglicht werden, so dass insbesondere die auch im Stand der Technik vorhandenen Positionsungenauigkeiten von bis zum mehreren 0,1 mm signifikant reduziert werden können.

Ferner kann erfindungsgemäß durch die kompakte Bauweise insbesondere des Getriebes 3 eine axiale Länge der Hubverstellvorrichtung 1 reduziert werden. Weiter kann die erfindungsgemäße Hubverstellvorchtung 1 deutlich kostengünstiger und weniger komplex bereitgestellt werden, da insbesondere auf aufwendige Teile wie eine Zahnkupplung, eine Metallbalgkupplung und pneumatische Verstelleinrichtungen für die Zahnkupplung verzichtet werden kann.

Somit wird eine deutliche Verbesserung der Hubverstellvorrichtung gegenüber dem Stand der Technik realisiert.

## Patentansprüche

1. Hubverstellvorrichtung, welche eine Hubhöhe einer Wickelnadel (11) einer Wickelvorrichtung ändert, umfassend eine Verstellwelle (2), ein Getriebe (3), einen Verstellantrieb (4), und einen Kurbeltrieb mit Kurbelstange (16), welcher die einen Wickeldraht führende Wickelnadel (11) hin- und hergehend antreibt, wobei die Kurbelstange (16) über eine hohle Antriebswelle (14) mit einem Drehantrieb (13) verbunden ist und die Verstellwelle (2) in der hohlen Antriebswelle (14) angeordnet ist, **dadurch gekennzeichnet,**
**dass** das Getriebe (3) einen Außenring (5) mit einer Innenverzahnung (6), ein flexibles Getriebebauteil (7) mit Außenverzahnung (8), ein elliptisches Innenbauteil (9) und eine zwischen dem elliptischen Innenbauteil (9) und dem flexiblen Getriebebauteil (7) radial angeordnete Lagereinrichtung (10) aufweist, wobei eine Zähnezahl von Innenverzahnungen und Außenverzahnungen voneinander verschieden ist, wobei die Innenverzahnung (6) sich abschnittsweise mit der Außenverzahnung (8) im Eingriff befindet, und wobei der Außenring (5) mit der Verstellwelle (2) verbunden ist und das elliptische Innenbauteil (9) mit einer Abtriebswelle des Verstellantriebs (4) verbunden ist.

2. Hubverstellvorrichtung nach Anspruch 1, **dadurch gekennzeichnet, dass** das flexible Getriebebauteil eine flexible Buchse mit Außenverzahnung oder ein flexibler Zahnriemen ist.

3. Hubverstellvorrichtung nach Anspruch 1 oder 2, **dadurch gekennzeichnet, dass** das Getriebe (3) und der Verstellantrieb (4) in einer kompakten Baueinheit integriert sind.

4. Wickelvorrichtung zum Aufbringen eines Wickeldrahts auf ein zu bewickelndes Bauteil, insbesondere einen Anker einer elektrischen Maschine, umfassend eine Hubverstellvorrichtung nach einem der vorhergehenden Ansprüche.

## Claims

1. Travel adjustment apparatus which changes a travel height of a winding needle (11) of a winding apparatus, comprising an adjustment shaft (2), a gear mechanism (3), an adjustment drive (4) and a crank mechanism with a crank rod (16) which drives a winding needle (11), which guides a winding wire, to and fro, with the crank rod (16) being connected to a rotary drive (13) by means of a hollow drive shaft (14), and the adjustment shaft (2) being arranged in the hollow drive shaft (14), **characterized in that** the gear mechanism (3) has an external ring (5) with an internal tooth system (6), a flexible gear mechanism component (7) with an external tooth system (8), an elliptical internal component (9) and a bearing device (10) which is arranged between the elliptical internal component (9) and the flexible gear mechanism component (7), with the number of teeth of the internal tooth systems and external tooth systems differing from one another, with the internal tooth system (6) engaging with the external tooth system (8) in sections, and with the external ring (5) being connected to the adjustment shaft (2), and the elliptical internal component (9) being connected to an output shaft of the adjustment drive (4).

2. Travel adjustment apparatus according to Claim 1, **characterized in that** the flexible gear mechanism component is a flexible bushing with an external tooth system, or a flexible toothed belt.

3. Travel adjustment apparatus according to Claim 1 or 2, **characterized in that** the gear mechanism (3) and the adjustment drive (4) are integrated in a compact unit.

4. Winding apparatus for fitting a winding wire to a component which is to be wound, in particular to an armature of an electrical machine, comprising a travel adjustment apparatus according to one of the preceding claims.

## Revendications

1. Dispositif de réglage de levage, qui modifie une hauteur de levage d'une aiguille d'enroulement (11) d'un dispositif d'enroulement, comprenant un arbre de réglage (2), une transmission (3), un entraînement de réglage (4) et une commande à manivelle avec une bielle (16), qui entraîne suivant un mouvement de va et vient l'aiguille d'enroulement (11) guidant un fil d'enroulement, la bielle (16) étant connectée par le biais d'un arbre d'entraînement creux (14) à un entraînement en rotation (13) et l'arbre de réglage (2) étant disposé dans l'arbre d'entraînement creux (14), **caractérisé en ce que** la transmission (3) présente une bague extérieure (5) avec une denture intérieure (6), un composant de transmission flexible (7) avec une denture extérieure (8), un composant interne elliptique (9) et un dispositif de palier (10) disposé radialement entre le composant interne elliptique (9) et le composant de transmission flexible (7), les nombres de dents des dentures intérieures et des dentures extérieures étant différents, la denture intérieure (6) se trouvant en prise par section avec la denture extérieure (8) et la bague extérieure (5) étant connectée à l'arbre de réglage (2) et le composant interne elliptique (9) étant connecté à un arbre de sortie de l'entraînement de réglage (4).

2. Dispositif de réglage de levage selon la revendication 1, **caractérisé en ce que** le composant de transmission flexible est une douille flexible avec une denture extérieure ou une courroie dentée flexible.

3. Dispositif de réglage de levage selon la revendication 1 ou 2, **caractérisé en ce que** la transmission (3) et l'entraînement de réglage (4) sont intégrés dans une unité constructive compacte.

4. Dispositif d'enroulement pour placer un fil d'enroulement sur un composant à enrouler, en particulier un induit d'une machine électrique, comprenant un dispositif de réglage de levage selon l'une quelconque des revendications précédentes.
